# EUROPEAN PATENT SPECIFICATION

(11) **EP 1 040 025 B1**
(45) Date of publication and mention of the grant of the patent: **11.06.2003**
(21) Application number: 98964648.4
(22) Date of filing: 18.12.1998
(51) Int. Cl.: B60K 20/04, F16H 59/04

(54) **MANOEUVERING DEVICE**
MANÖVRIERVORRICHTUNG
DISPOSITIF DE MANOEUVRE

(30) Priority: 19.12.1997 SE 9704814
(43) Date of publication of application: 04.10.2000
(73) Proprietor: Kongsberg Automotive AB, 565 28 Mullsjö (SE)
(72) Inventor: SKOGWARD, Kenneth, S-561 48 Huskvarna (SE); ELFVERSSON, Sven, S-565 32 Mullsjö (SE)
(74) Representative: Mossmark, Anders
(86) International application number: SE9802399
(87) International publication number: WO99032316

(56) References cited:
- EP-A1- 0 756 112
- EP-A2- 0 358 894
- WO-A-99/00265
- DE-A1- 3 734 404
- US-A- 4 912 997

## Description

### TECHNICAL FIELD:

The present invention relates to an operating device comprising an operating lever and an operating console and being provided with at least a first pivot link by means of which the lever is articulately provided in relation to the operating console for adjustment between a number of operating positions wherein the operating positions of the operating lever around said pivot link are intended to be transformed into corresponding operating conditions in a device which is to be operated, wherein said pivot link forms a first support member, which is adapted to form a first pivot point for the operating lever in the operating console, that the pivot link is adapted to allow rotation of the operating lever in relation to the operating console around several axis in the space, wherein a second support member for the operating lever in relation to the operating console is adapted to form a second pivot point for the operating lever, which pivot point, together with the first pivot link, defines a first pivot axle for the operating lever, wherein a third support member is adapted to form a third pivot point for the operating lever, wherein said pivot point, together with the first pivot link, defines a second pivot axle for the operating lever, wherein the first and the second pivot axle are angularly arranged in relation to each other, wherein the second and the third support member, by means of rotation of the operating lever around the first pivot link, are adapted to be adjusted between a first operating mode, in which the operating lever is rotated around the first pivot axle, wherein the third support member performs a transfer movement in relation to the operating console, wherein a first transmission agent is adapted to transmit said operating positions in a first operating mode and a second transmission agent is adapted to transmit said operating positions in a second operating mode.

An operating device as defined before is known from WO-A-99-00265 being a document in accordance with Article 54(3)EPC.

### BACKGROUND OF THE INVENTION:

In the field of conventional operating devices, such as gear devices for motor vehicles, a gear shift lever forming part of the device can be adjusted in several different positions, which each determine a certain operating condition in the device, for example a gearbox, which is to be operated. In this regard, via a transmission agent, e.g. in the form of a wire, link arms, hydraulics or electrical signals, the operating condition of the lever is transmitted to the device which is to be operated. As regarding a certain type of operation, it may be desirable that a first transmission agent is not activated, but rather that the position of the operating lever is transmitted via a second transmission agent. In this regard, as regarding a conventional operating device, the first transmission agent must be disengaged when the second transmission agent is engaged, which results in a complex mechanism.

EP-A-756 112 discloses a prior known operating device of the type mentioned above and as defined in the preamble of claim 1.

### SUMMARY OF THE INVENTION:

The object of the present invention is to provide an operating device which, by means of few movable parts, makes an alternate activation of various transmission agents possible.

Said object is achieved by means of an operating device according to the present invention, which is defined by the features of claim 1.

The invention will be further described in the following with a couple of embodiments and with reference to the annexed drawings, in which
Figs. 1-4 show various perspective views of the operating device in a first embodiment,
Figs. 5-9 show various cross-sectional views through the operating device in the first embodiment,
Figs. 10 and 11 show schematically different operating positions for a support member forming part of the operating device, and
Fig. 12 shows schematically and three-dimensionally the movement pattern of the operating device according to the first embodiment.
Figs. 13 shows schematically, with an additional view, the movement pattern of parts of the operating device.
Figs. 14-18 show perspective views of the operating device in a second embodiment with cross-sectional sections, and
Fig. 19 shows schematically the movement pattern of the operating device according to the second embodiment.

### PREFERRED EMBODIMENTS:

In the shown examples, the operating device according to the invention is constituted by a gear device for automatic gearboxes for motor vehicles, wherein a function for manual selection of gear positions also is provided.

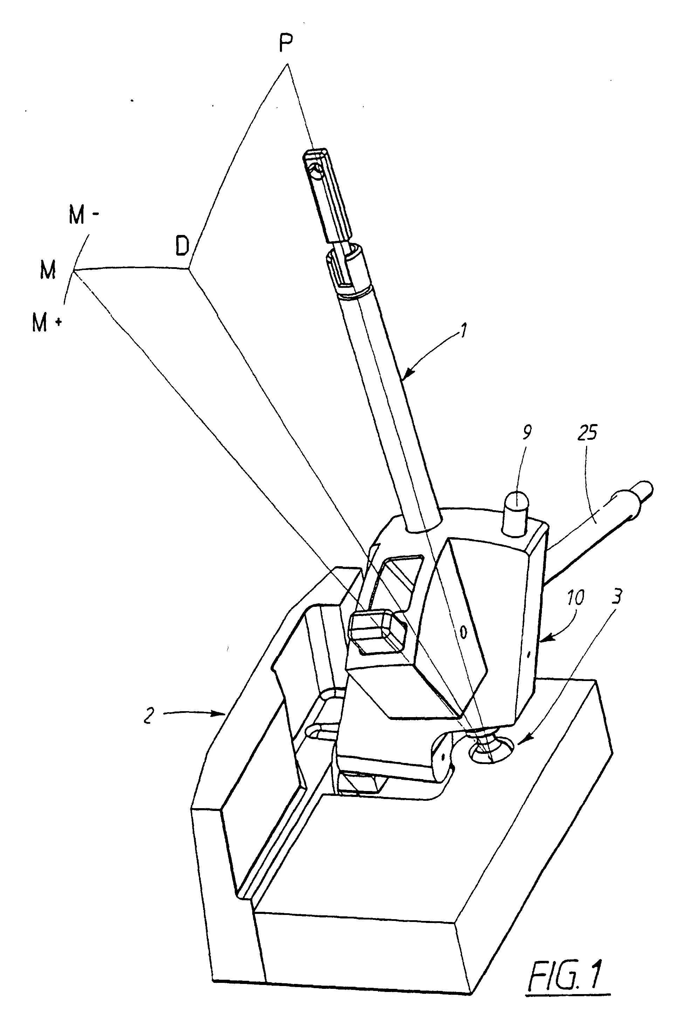

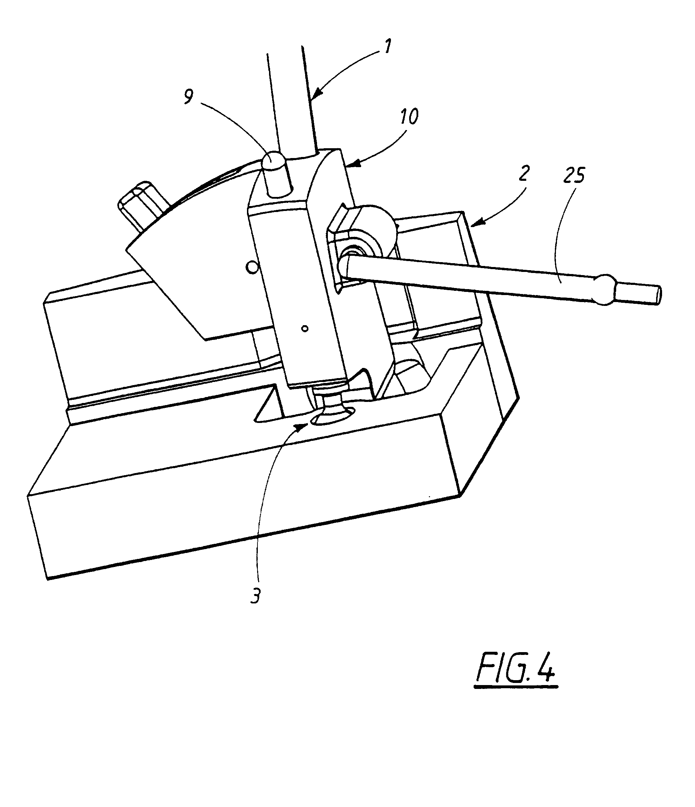

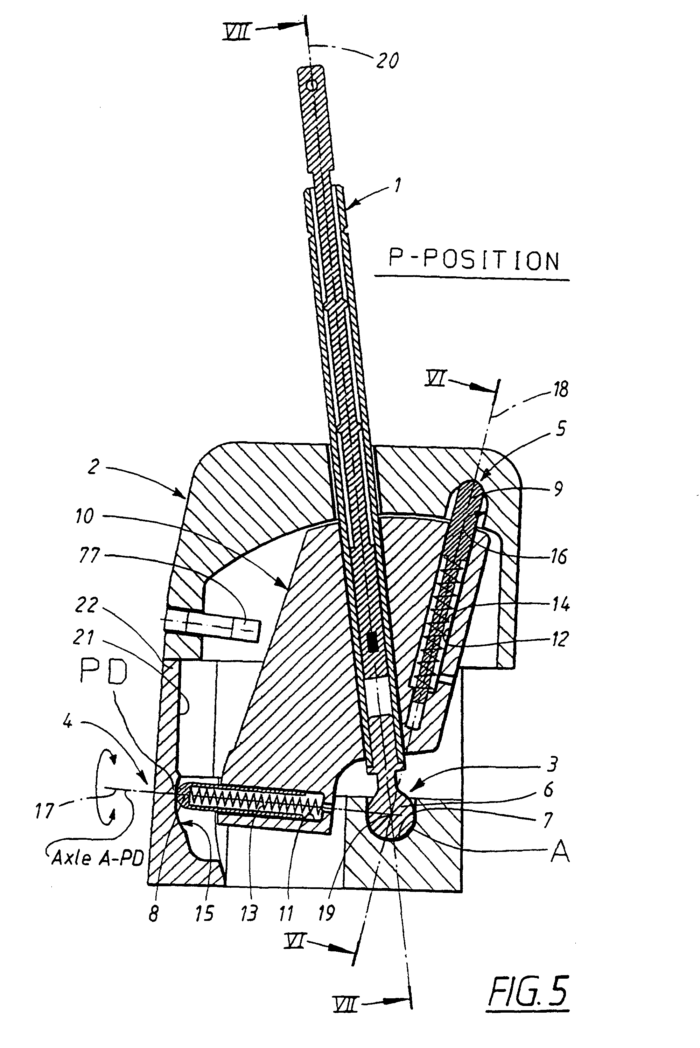

As is apparent from the first embodiment (see Figs. 1-5), the operating device consists of an operating lever 1 and an operating console 2 in which the operating lever is articulated in order to assume various operating positions, which are to be transmitted to various operating conditions in the device which is to be operated, in the shown example various gear positions in the automatic gearbox. The operating lever 1 is positionally guided in the operating console by means of three support members, i.e. three support points, which are connected with the operating lever and, in cooperation with support members and guiding members in the operating console, define the movement pattern and the positions of the lever 1. A first support member 3 (see Fig. 5) is formed by a pivot link 3 which invariably forms a pivot point which is fixedly defined in the operating console, whereas the two other support points 4, 5 alternatingly form fixed pivot points in the operating console and, together with the first pivot point 3, define a pivot axle each or are alternatingly movable along defined paths in the operating console. In this manner, the operating lever is made to alternate between various movement patterns and positions in a manner which will be described in more detail below.

As is apparent from Fig. 5, the pivot link 3 in the operating device according to the first embodiment is arranged on the lower part of the operating lever 1, more precisely in the lower end of the lever in the form of an articulated ball 6, which is almost freely rotatably mounted in an articulated socket 7 in the operating console, i.e. so that the pivot link 3 essentially not limits the rotary movements of the lever. In the shown example, the two other support points 4, 5 are formed by support members in the form of pins 8, 9 which are arranged in a holder 10 which is fixedly attached to the lever 1. The two pins 8, 9 are linearly movable in each bore hole 11, 12 in the holder 10 and are spring-loaded by means of a respective spring 13, 14, so that they strive outwards from the first pivot point, i.e. the pivot link 3, towards a respective guiding member 15, 16 in the operating console.

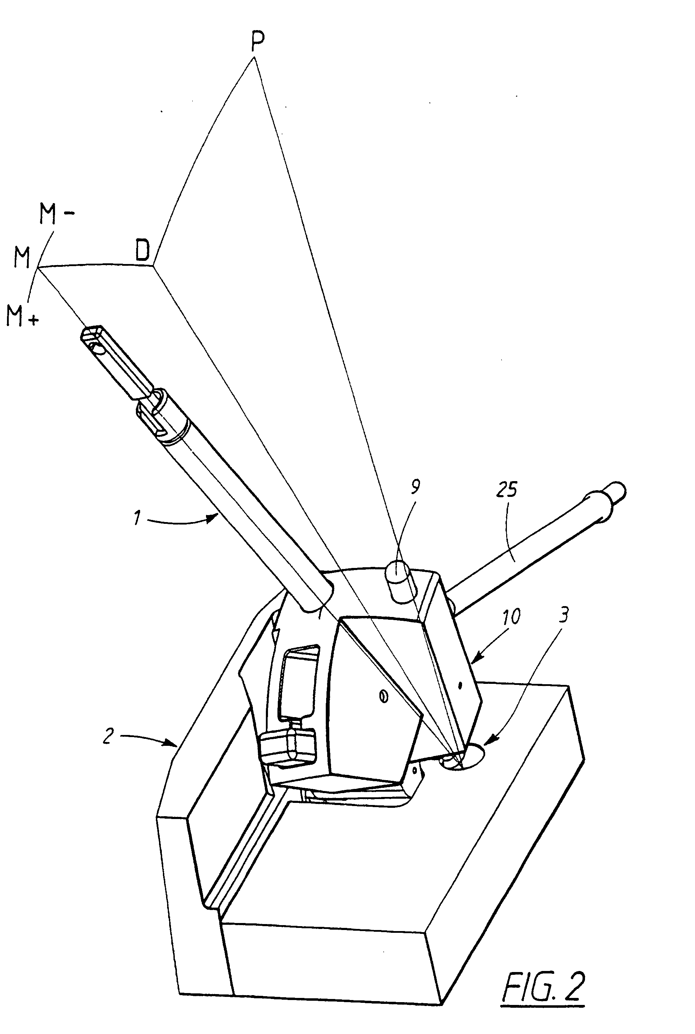

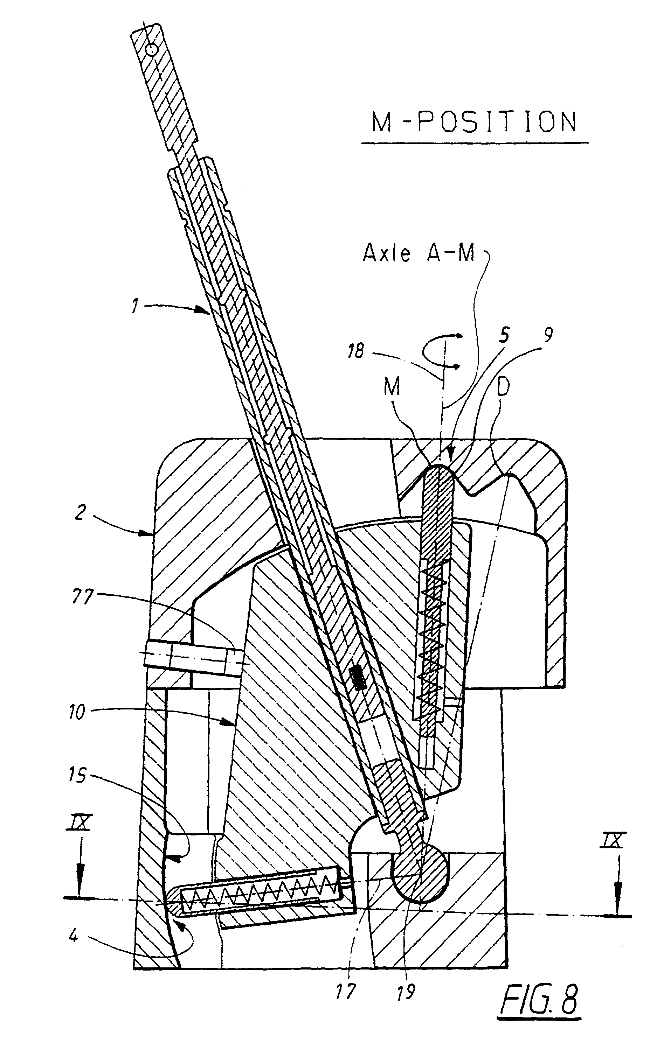

Together with the second support point 4, the pivot link 3 defines a first pivot axle 17, around which axle the lever is rotatably mounted for a rotary movement in a first gear mode, which is assumed when the lever is in the position according to Fig. 1 and Figs. 5-7. Together with the third support point 5, the first support point, i.e. the pivot link 3, forms a second axle 18 which forms a pivot axle in a second gear mode when the lever is in the position according to Figs. 2 and 8. The two axles 17, 18 cut each other in the first support point 3, i.e. in the center of rotation 19 of the pivot link 3, through which the longitudinal axis 20 of the operating lever 1 runs as well.

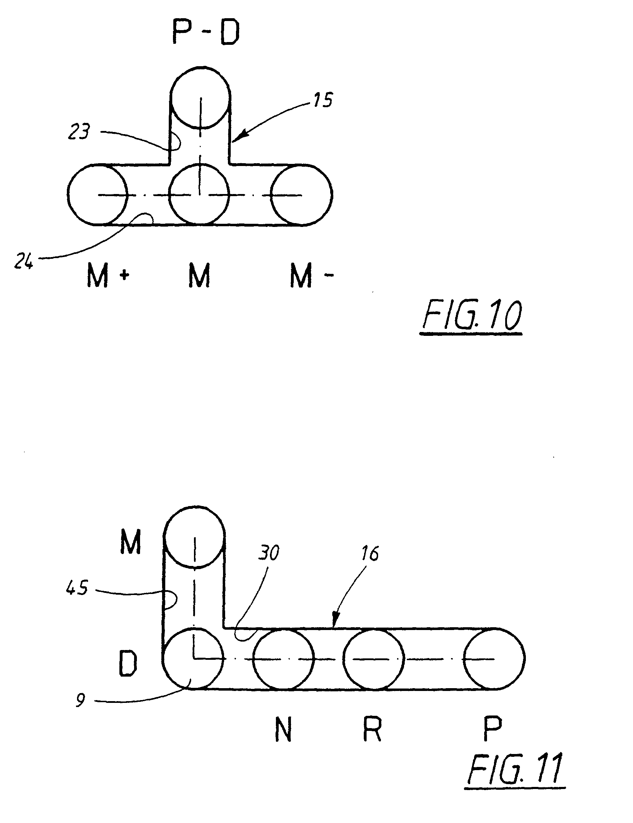

The guiding member 15 is designed as a guiding path in the form of a T-shaped track, which is arranged in the inner wall 21 of a side section 22 of the operating console 2. The principal design of the track is shown schematically in Fig. 10, where the support member 8 is shown in various alternative positions as well. In the first embodiment, the track is designed as a reversed T having a vertical section 23 and a horizontal section 24. When the support member 8 is situated in the vertical section 23, i.e. in position P-D, the support member 8 is blocked against horizontal movements but, on the other hand, permits a rotary movement in relation to the guiding member 15, wherein the support member forms a pivot point and the axle 17 forms a pivot axle, wherein rotary movements are allowed in the operating lever 1 transversely to the plane of the paper according to Fig. 5, which represents the first operating mode.

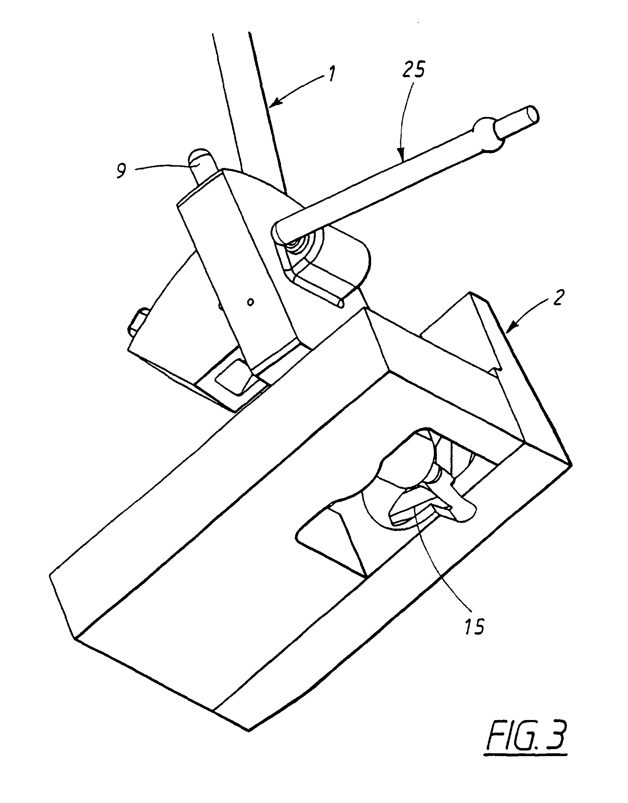

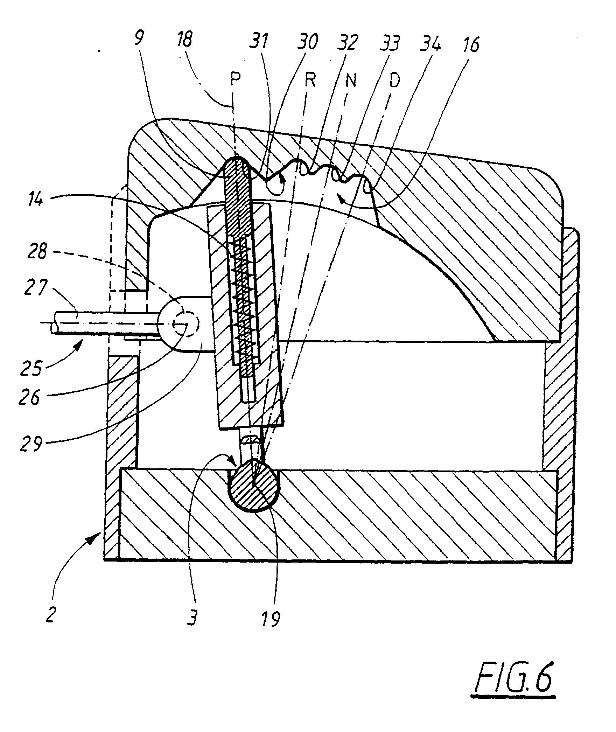

The operating device includes a first transmission agent 25 (see Figs. 3, 4, 6 and 7) which is adapted for adjustment by means of the gear movements of the operating lever in the first operating mode, i.e. by rotation around the first pivot axle 17. In the first example, the transmission agent is attached to the operating lever 1, more precisely to an attachment point 26 in the holder 10, said attachment point being situated above the center of rotation 19 of the lever. In Fig. 6, the location of the transmission agent is shown clearly. In the shown example, the transmission agent is designed as a wire or a link arm 27 which, by means of an end pin 28, in a conventional manner is articulately mounted in the holder by means of an attachment bracket 29. In the first operating mode, the transmission agent 25 is adapted to transmit the various turning positions of the operating lever to various turning positions in the automatic gearbox. In a second gear mode, however, said transmission agent 25 is adapted to be inactive, which shall be described in more detail below. Fig. 6 shows the guiding member 16 in the cross-sectional view VI-VI in Fig. 5. In this cross-section, a first guiding path 30 for the support member 9 is shown. This guiding path is adapted to allow a transfer of the support member 9 in the plane of the paper according to Fig. 6 when a certain resistance is overcome, which is due to a profiling of the path so that a number of distinct functional positions 31-34 are created, which are defined by means of intermediate peaks 35. In cooperation with the compressive force of the compression spring 14 in the direction of the axle 18 from the pivot link 3, a certain resistance is created in the operating lever 1 for adjustment between the functional positions. In the case with an automatic gearbox, the functional positions are in turn represented by, for example, parking position P, reverse position R, neutral position N and driving position D, which thus form the first operating position.

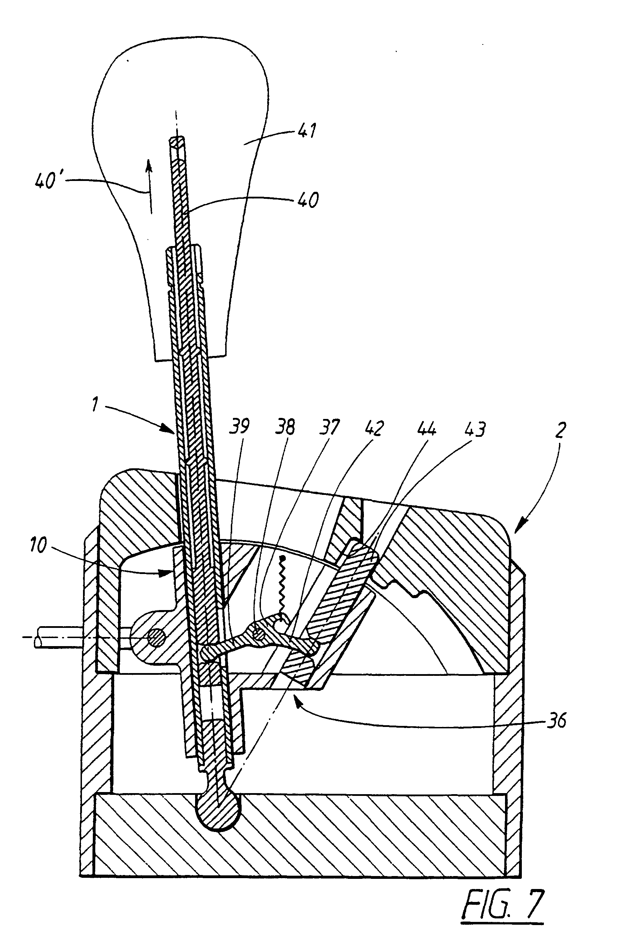

As is shown with an example in Fig. 7, which is a cross-section through the longitudinal axis 20 of the operating lever at right angles to the plane of the paper according to Fig. 5, i.e. the cross-section VII-VII, a blocking device 36 is included in the shown example, said blocking device being adapted to block the lever against unintentional movements, for example from P-position to R-position, during certain functional positions. In the shown first example, the blocking mechanism consists of an operating arm 37 in the form of a double-armed lever, which is mounted around an axle 38 in the holder 10. By means of one of its arm parts 39, the operating arm is adapted to cooperate with an operating bar 40, which is movable in the tubular operating lever 1 and is adapted to be activated at the control stick knob 41 of the operating lever 1. The operating arm 37 discloses a second arm part 42 which is adapted to cooperate with a blocking pin 43 which is movable forwards and backwards in the holder 10 and is adapted to be inserted into a recess 44 in the operating console 2 during the selected functional position. The operating arm 37 is spring-loaded, so that it strives towards the blocking position and can be released in the direction of the arrow 40' by raising of the operating rod 40 by means of a (not shown) key in the lever in connection with the knob 41.

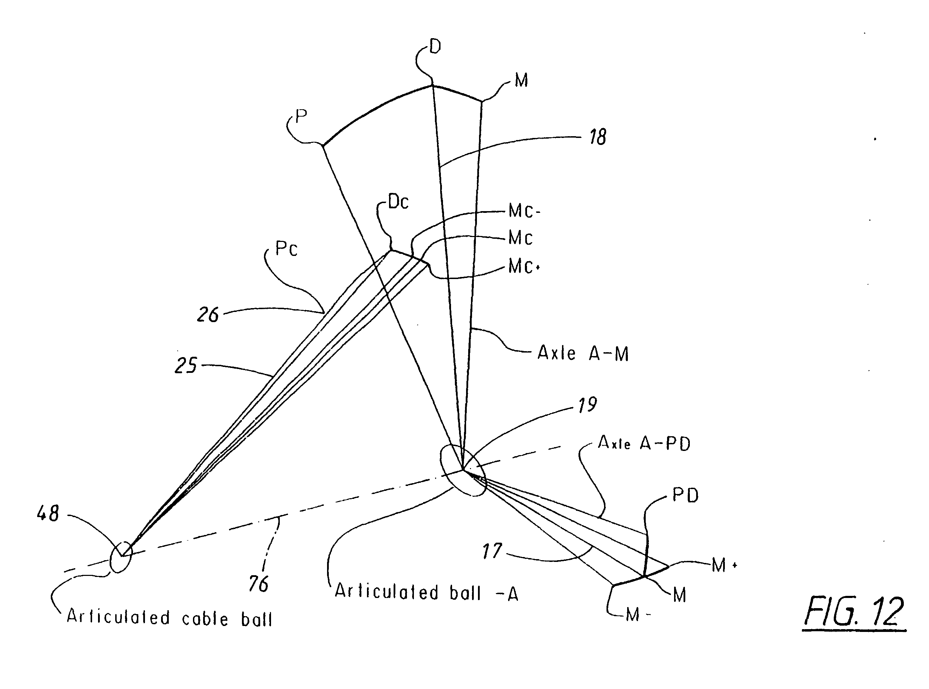

The first operating mode has been described above, which operating mode in the shown example corresponds to a strict automatic gear-change mode, in which the motor vehicle during driving position D automatically changes between equal gear steps. For an alternative gear changing function with a manual selection of gear steps, the operating device according to the invention is provided with a second operating mode which is assumed by means of the fact that the operating lever can be positioned at right angles to the first movement path 30 according to Fig. 11, more precisely in the plane of the paper according to Fig. 8. This is possible due to the fact that the two support points 4, 5, i.e. the two support members 8, 9, are allowed to follow the lever movement from position D to position M (see Fig. 1). This is possible due to the design of the two support members 15, 16. By means of its T-shape according to Fig. 10, the first guiding member 15 allows a transfer of the support member 8 from position P-D to position M, which is due to the fact that the support member 8 is allowed to move in the vertical guiding path 23. Simultaneously, via a second guiding path 45 which is at right angles to the first guiding path 30, the second support member 9 is allowed to move from position D to position M (see Fig. 11). During this mode changing movement, the operating lever 1 is rotated around a third geometrical axis 76 (see Fig. 12), which extends through the center of rotation 19 and a link point 48 for the transmission agent 25.

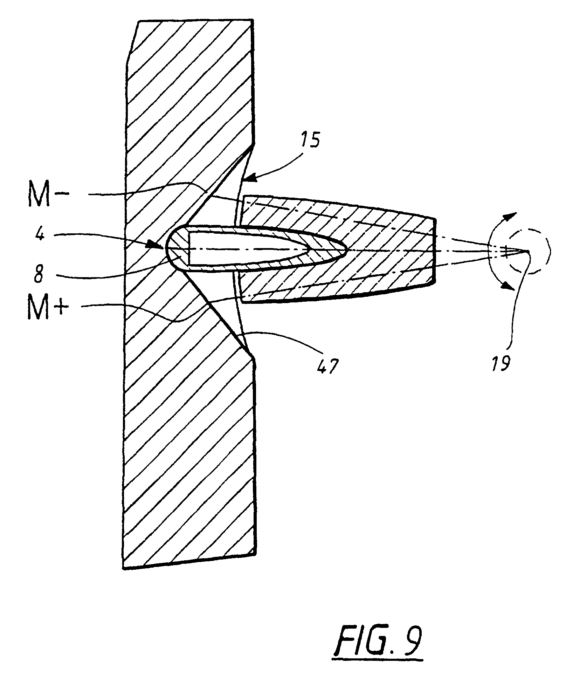

With the support members 8, 9 in their respective M-positions according to Figs. 8-11, the operating lever 1 is allowed to be moved forwards and backwards, respectively, in a direction which is essentially at right angles to the plane of the paper according to Fig. 8. By means of adjustment of the operating lever to M-position, a link point change namely occurs from the support point 4 to the support point 5, which in this second gear mode is provided with a link point function. This results in that a pivot axle change also occurs from pivot axle 17 to pivot axle 18, while at the same the direction of these axles is changed. The operating lever will now be rotated around the pivot axle 18 with a relatively short rotary movement. The movement is namely limited by the length of the guiding path 24, which allows a movement of the support member 8 from a neutral position M to a first end position M+ and a second end position M-. Due to the spring-load of the support member 8 by means of the compression spring 13 and a selected profile form of the guiding path 24 with a cup-shaped neutral position M and upwardly sloping sections 46, 47 from the neutral position towards the end positions M+ and M-, a self adjustment to neutral position M from the end positions occurs when the operating lever has been disengaged from operating force (see Fig. 9 and also Fig. 3).

In Fig. 12, the movement pattern of the axles of the operating device and the transmission agent 25 is illustrated schematically with a three-dimensional representation. The first pivot axle 17 between the permanent link point 19 is shown in four positions, of which positions the position A-PD provides the pivot axle function. The second pivot axle 18 is shown in three positions, of which positions the position A-M provides the pivot axle function. The effect of the operating lever on the transmission agent 25 is also apparent from Fig. 12. Thus, during the first operating mode, the transmission agent is intended to be adjusted by means of the various movements of the operating lever, more precisely to be displaced essentially in its longitudinal direction forwards and backwards, which is apparent from the marked differences in the position of the attachment point 26 with position Dc when the lever, and thereby the axle 18, is in position D and the attachment point with position Pc when the lever, and thereby the axle 18, is in position P.

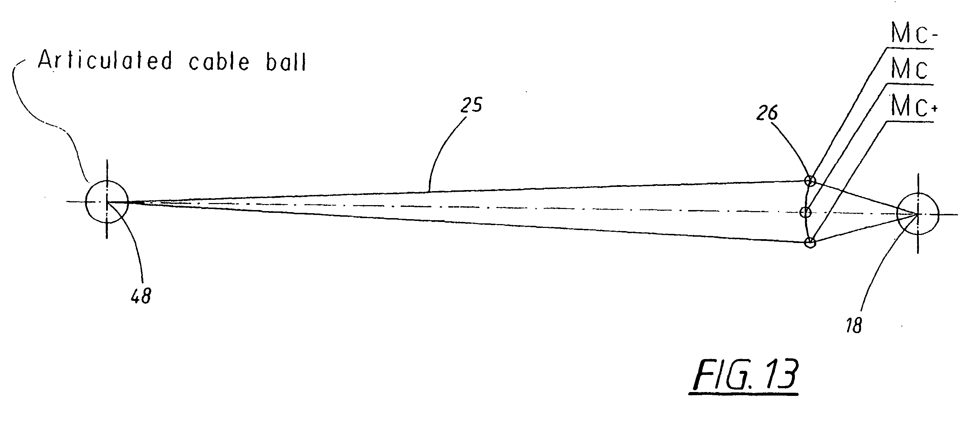

As is best illustrated in Fig. 13, when the operating lever 1 is moved to the second operating mode, a movement essentially occurs which is at right angles to the longitudinal direction of the transmission agent. Thus, no active adjustment movement, i.e. longitudinal displacement movement, of the transmission agent 25 occurs during adjustment of the operating lever between the position M, and M+ and M-, respectively, which is represented by the positions Mc, and Mc+ and Mc-, respectively, in Figs. 12 and 13. In order to minimize the effect on the side movement of the transmission agent, this is advantageuosly provided with a link point 48 in, for example, the operating console at a distance from the attachment point 26. More precisely, in the second operating mode, an arc-movement occurs at the attachment point 26 around the pivot axle 18. Due to the fact that the attachment point 26 is orientated essentially in the area of the longitudinal direction of the transmission agent at a small distance from the pivot axle 18, this movement will have an inconsiderable effect on the first transmission agent, which thereby will be inactive and not perform any translational movement during the second rotational mode. Instead, the second transmission agent will be activated, which is not shown, but advantageously has the same construction and function as in the first embodiment.

The operating movements of the operating lever during the second operating mode are transmitted to an automatic gearbox via other transmission agents, which suitably are constituted by electrical sensors, which detect the position of the operating lever and electrically transmit these to electrical actuators in the automatic gearbox for adjustment of this between various gear steps. Examples of electrical sensors are micro switches 78, which can be situated on the inside of the operating console (see for example Fig. 5) in order to detect, on the one hand, that the second operating mode is assumed, and, on the other hand, in which positions the lever is situated during this mode. In the shown example, the positions are detected by means of contact with any section of the holder 10. Examples of such switches and their functions are described in more detail in the international patent application nr WO 97/01455, which construction and function can be applied completely to the present invention.

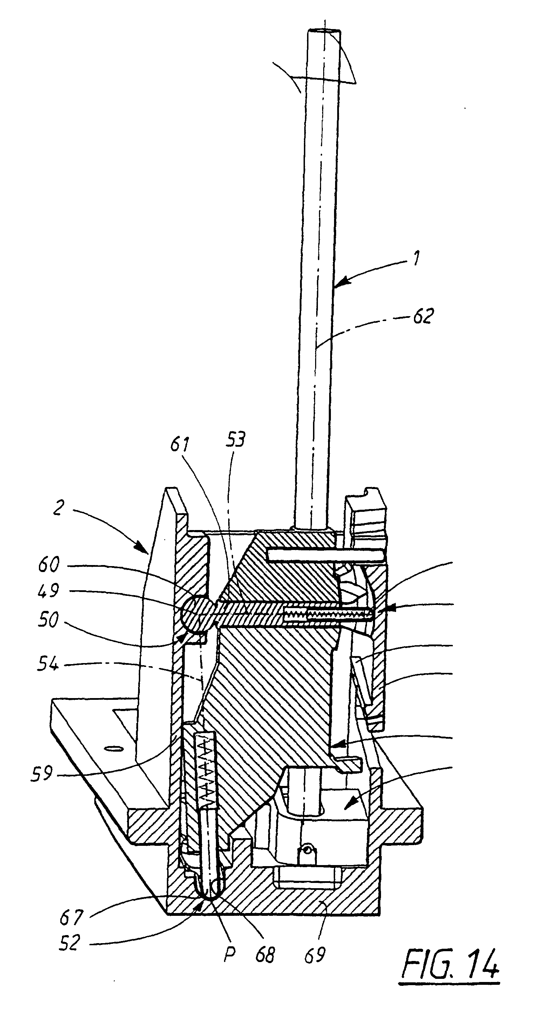

The second embodiment of the operating device according to the invention is based on the same basic principle as the first embodiment, namely the three support points between the operating lever 1 and the operating console 2, of which support points the first support point 49 is represented by an almost unlimited articulated pivot link 50 which invariably is a pivot link with a fixed position (see Fig. 14), whereas the two other support points 51, 52 alternates between a function as a pivot link and a translational movement in relation to the operating console. In this manner, the two axles 53, 54 are formed, wherein the first axle 53 extends between the first and the second support point 49, 51 and the second axle 54 extends between the first and the third support point 52. In this manner, a pivot axle change thus occurs for the pivot axle, around which the operating lever 1 is made to change for adjustment between two different operating modes, in which two different transmission agents are alternatingly activated and adjusted.

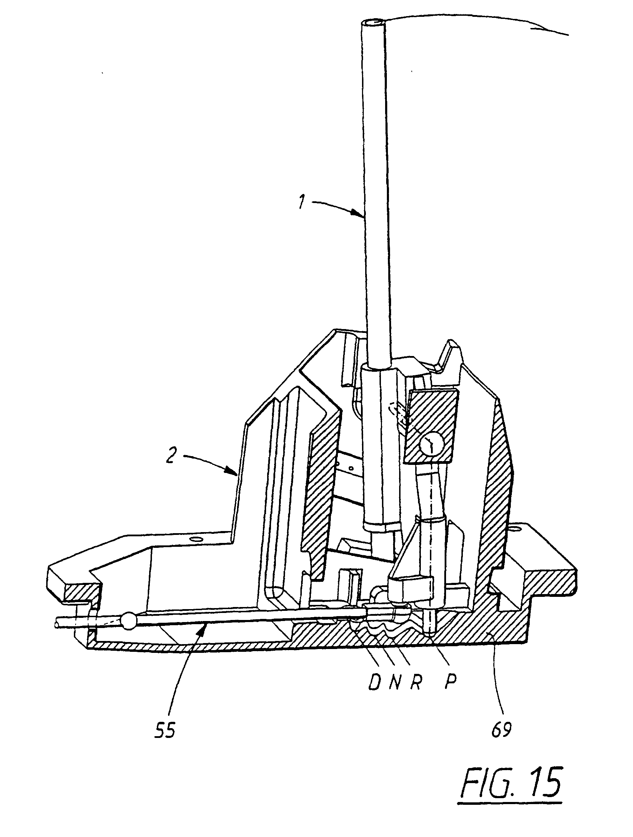

The second embodiment, its construction and function, will be described with reference to Figs. 14-19. The operating device is first shown in Figs. 14-16 in its first operating mode for adjustment between the various gear positions, for example the above-described positions P, R, N, D. In the second embodiment, the first pivot link 53 and the transmission agent 55 has changed places as compared with the first embodiment, so that the first pivot link is vertically situated at a distance from the lower end 56 of the operating lever 1, whereas the first transmission agent 55 with its attachment point 57 is arranged in connection with the lower end of the lever. To this end, the first support point 49 in the form of the pivot link 50 is therefore mounted in one side section 59 of the operating console. More precisely, the articulated ball 60 is provided with a shaft 61 which is directed at right angles to the longitudinal axis 62 of the operating lever 1 and is mounted in the holder 63, to which holder the operating lever 1 is fixedly attached and which thus follows the rotary movements of the lever. The second support point 51 has the same construction as the support point 15 in the first embodiment, but is vertically situated above the lower end 56 of the operating lever. The support point 51 also discloses a spring-loaded support member 64 which, by means of the spring-load, strives in the direction from the first support point 50 and towards a guiding member 65 in the form of a guiding path in the opposite side section 66 of the operating console. In the same manner as corresponding guiding members in the first embodiment, the guiding member 65 consists of a T-shaped track which, however, is positioned as a T turned the right way round. This means that, in the position which is shown in Figs. 14-16, the second support point 51, in the same manner as in the first embodiment, has the function of a pivot link, which is due to the fact that the support point is not laterally movable during this position.

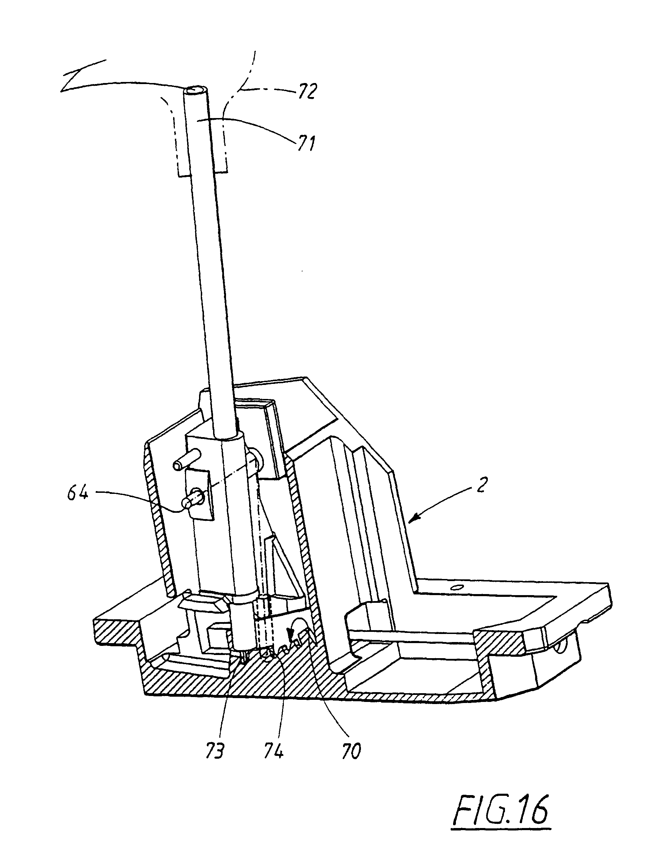

Likewise, the third support point 52 has the same principal construction as the third support point 5 in the first embodiment. The support point 52 consists of a support member 57, which is constituted by a pin, which is arranged in the holder 63 so that it follows the rotary movement of the holder and the lever. Together with the first support point 50, the support member 67 defines the extension of the second axle 54. As is the case in the first embodiment, the support member 67 is arranged in a bore hole in the holder 63 and is biased towards the fixed guiding member 68 in the operating console. More precisely, the guiding member 68 is arranged in a bottom section 69 of the operating console and defines a guiding path for the support member 67 in the first gear mode, for example the positions P, R, N, D. This is achieved with basically the same design of the guiding member as in the first embodiment and, for that reason, the details regarding their construction are apparent from the description with reference to Figs. 6, 8, 10 and 11. The guiding member is, however, reversed as regards the transversely arranged guiding path for adjustment from the first operating mode, i.e. in D-position to the second operating mode, i.e. M-position. This guiding track will be directed in the opposite direction as viewed from the inside of the operating console, which is due to the guiding member being situated below the first pivot axle 61. In order to block the operating lever in the first operating mode, a blocking mechanism is provided also in this embodiment, said blocking mechanism being apparent from Fig. 16 according to an example. In this embodiment, the blocking mechanism 70 can be arranged at the lower end of the operating lever 1, which is due to the fact that it is movable during the rotary movement. The blocking mechanism 70 presents a key (not shown) which, for example, is provided by a key which is situated at the upper end 71 of the operating lever in connection with the operating knob 72, said key adjusting a catch 73 via an operating rod (not shown) in the form of a draw bar, said catch being movable in the longitudinal axis 62 of the operating lever and being spring-loaded in the direction towards a number of fixed locking recesses 74.

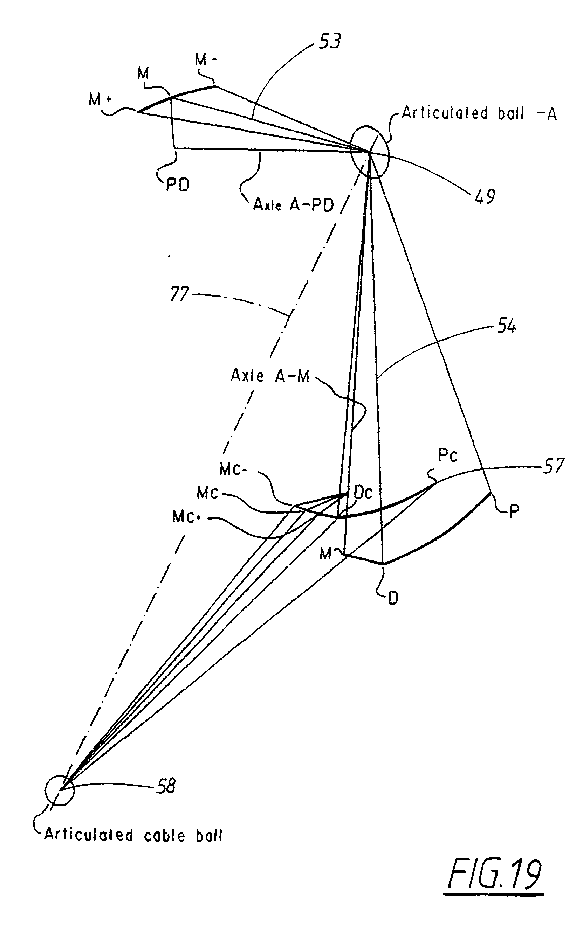

The adjustment from the first operating mode to the second operating mode also occurs in the second embodiment in the D-position, wherein the operator, by means of the operating knob, moves the operating lever sideways by means of a rotation around the first link point around an axle 77, which also extends through the link point 58. This axle 77 is provided in Fig. 19, which schematically illustrates the movement pattern of the two axles 53, 54 and also the movement pattern of the attachment point of the first transmission agent, which is described in more detail below.

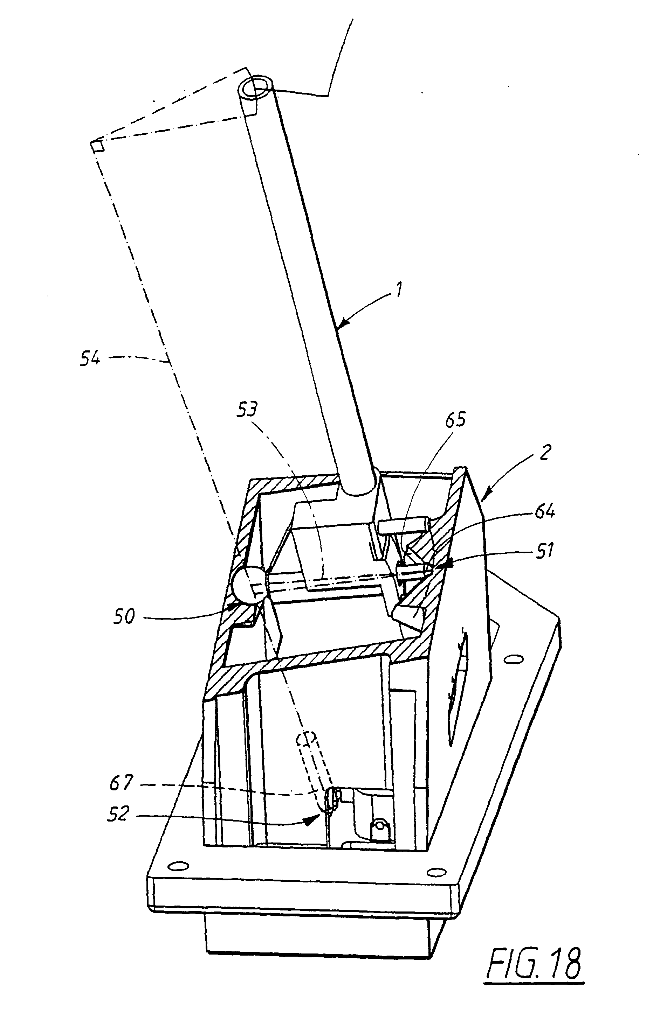

As is best apparent from Fig. 18, the second support point has been transferred in the second operating mode, more precisely from its position for rotary function to M-position. In this position, the support member 64 transforms into a translatory movement function between a stable neutral position M and two opposed unstable positions M+ and M-, respectively, which has been described in more detail above in connection with the first embodiment with reference to Fig. 9 which in a corresponding manner is applicable to the second embodiment.

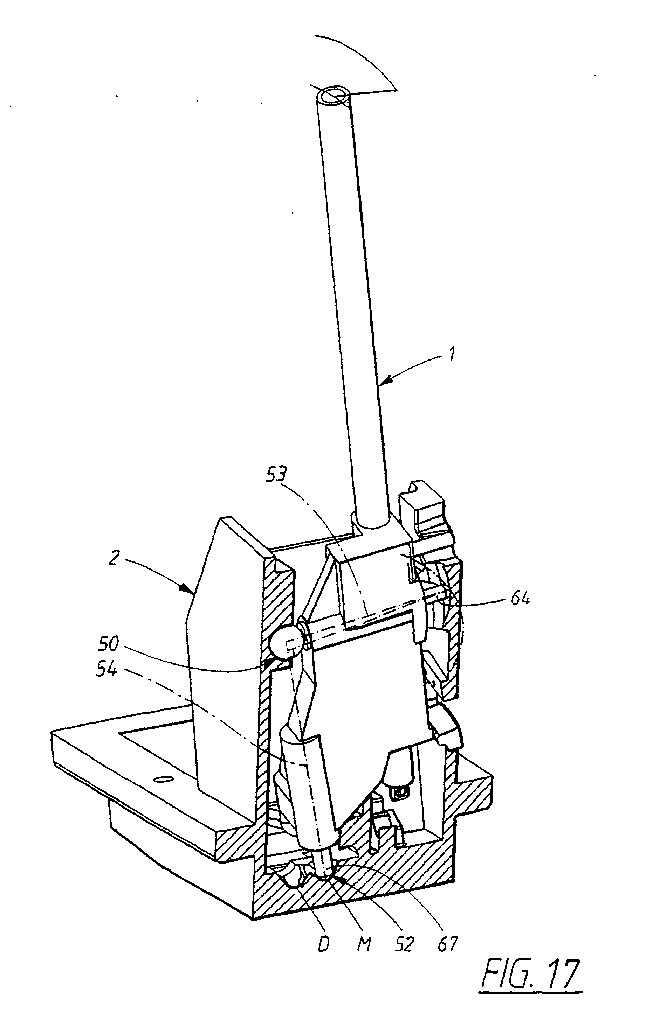

By means of the adjustment of the operating lever 1 to the second operating mode, the third support point 52 is also adjusted, more precisely, the support member 67 is adjusted to M-position (see Fig. 17) via the transversely arranged movement path, which corresponds to track 45 in the first embodiment (see Fig. 11). In this regard, the second support point 52 transforms from its translatory movement function in order to form a pivot point. In this regard, as is clearly illustrated in Fig. 18, the axle 54 is activated as a pivot axle in cooperation with the first link point 49 which invariably serves as a pivot point. As is apparent from this drawing, the operating lever 1 in this second rotational mode will rotate around a pivot axle which extends essentially in the longitudinal direction of the operating lever, in the shown example, however, at a distance from this. Thus, the operating lever will perform a shorter arc-movement along an arc 75 in the second operating mode. In principle, it is possible that the pivot axle 54 coincides with the longitudinal axis of the operating lever, wherein the movement of the operating lever in this mode is completely constituted by a turning movement, i.e. turning of the control stick knob.

Fig. 19 shows, apart from the movement pattern of the two axles 53, 54 and thereby the operating lever, the movement pattern of the transmission agent 55 and in that connection especially the movement pattern of its attachment point 57. In the first operating mode, the attachment point is transferred between Pc and Dc, which provides an active adjustment movement of the transmission agent 55, i.e. a translational movement forwards and backwards by operation of the operating lever. To some extent, the attachment point performs an arc-movement, which is evened out by means of the fact that the transmission agent 55 in this example also is provided with a link member 58 at a distance from the attachment point. In the second operating mode, the first transmission agent 55 is not activated, which is due to the fact that its attachment point 57 is essentially not transferred in the longitudinal direction of the transmission agent, but follows an arc-movement which is transverse to the longitudinal direction (see Fig. 13), which is completely applicable for the second embodiment as well.

The invention is not limited to the embodiments which are described above, but may be varied within the scope of the appended claims. For example, the various axles may assume other relative angular positions. Furthermore, the support members and the guiding members, as well as the holder and the blocking mechanisms being shown, can be designed in another way. Of course, other gear positions than the described positions may occur, however without departing from the scope of the appended claims.

## Claims

1. Operating device, comprising an operating lever (1) and an operating console (2) and being provided with at least a first pivot link (3/50) by means of which the lever is articulately provided in relation to the operating console for adjustment between a number of operating positions wherein the operating positions of the operating lever around said pivot link are intended to be transformed into corresponding operating conditions in a device which is to be operated, wherein
said pivot link (3/50) forms a first support member, which is adapted to form a first pivot point for the operating lever (1) in the operating console, wherein the pivot link is adapted to allow rotation of the operating lever in relation to the operating console around several axis in the space, and wherein a second support member (4/51) for the operating lever in relation to the operating console is adapted to form a second pivot point for the operating lever, which pivot point, together with the first pivot link, defines a first pivot axle (17/53) for the operating lever, and wherein a third support member (5/52) is adapted to form a third pivot point for the operating lever, **characterized in that** said third pivot point, together with the first pivot link, defines a second pivot axle (18/54) for the operating lever, that the first and the second pivot axle are angularly arranged in relation to each other, and that the second and the third support member, by means of rotation of the operating lever around the first pivot link, are adapted to be adjusted between a first operating mode, in which the operating lever is rotated around the first pivot axle, wherein the third support member performs a transfer movement in relation to the operating console, and a second operating mode, in which the operating lever is rotated around the second pivot axle, wherein the second support member performs a transfer movement in relation to the operating console, wherein a first and a second transmission agent are provided, said first transmission agent (25/55) is adapted to transmit said operating positions in said first operating mode and said second transmission agent is adapted to transmit said operating positions in said second operating mode, whereby said first transmission agent (25/55) is connected to the operating lever at an attachment point (26/57) which is adapted to actively transmit said positions during rotation around the first pivot axle (17/53) and to be inactive during rotation around the second pivot axle (18/54).

2. Operating device according to claim 1,
**characterized in that** said first pivot axle (17) extends through a lower end of the operating lever (1) and forms an angle in relation to a longitudinal axis (20) which extends in the longitudinal direction of the operating lever and that the attachment point (26) of the first transmission agent (25) is situated above the lower end.

3. Operating device according to claim 2,
**characterized in that** said first pivot link (3) is arranged at the lower end of the operating lever (1) and that the first pivot axle (17), the second pivot axle (18) and the longitudinal axis (20) of the operating lever cut each other in the pivot point (19) of the first pivot link.

4. Operating device according to claim 1,
**characterized in that** said first pivot axle (53) is situated at a distance from the lower end of the operating lever and that said attachment point (57) is situated below said pivot axle.

5. Operating device according to claim 4,
**characterized in that** the first pivot link (3/50) is situated at a distance from the operating lever (1).

## Patentansprüche

1. Manövriervorrichtung, bestehend aus einem Manövrierhebel (1) und einer Manövrierkonsole (2), mit wenigstens einem ersten Drehzapfengelenk (3/50), durch das der Hebel in Bezug auf die Manövrierkonsole zur Einstellung zwischen einer Zahl von Manövrierstellungen gelenkig vorgesehen ist, wobei die Manövrierstellungen des Manövrierhebels um das Drehzapfengelenk in zugeordnete Betriebszustände in einer zu betätigenden Vorrichtung transformierbar sind, wobei das Drehzapfengelenk (3/50) ein erstes Lagerelement bildet, das zur Bildung eines ersten Drehpunktes für den Manövrierhebel (1) in der Manövrierkonsole vorgesehen ist, wobei durch das Drehzapfengelenk der Manövrierhebel bezüglich der Manövrierkonsole um mehrere räumliche Achsen drehbar ist, und wobei ein zweites Lagerelement (4/51) für den Manövrierhebel bezüglich der Manövrierkonsole zur Bildung eines zweiten Drehpunktes für den Manövrierhebel vorgesehen ist, wobei der Drehpunkt zusammen mit dem ersten Drehzapfengelenk eine erste Drehachse (17/53) für den Manövrierhebel bildet, und wobei ein drittes Lagerelement (5/52) zur Bildung eines dritten Drehpunktes für den Manövrierhebel vorgesehen ist, **dadurch gekennzeichnet, daß** der dritte Drehpunkt gemeinsam mit dem ersten Drehzapfengelenk eine zweite Drehachse (18/54) für den Manövrierhebel bildet, daß die erste und die zweite Schwenkachse zueinander im Winkel angeordnet sind, und daß das zweite und das dritte Lagerelement durch Drehung des Manövrierhebels um das erste Drehzapfengelenk zwischen einem ersten Betriebszustand, in dem der Manövrierhebel um die erste Schwenkachse gedreht wird, bei dem das dritte Lagerelement eine Transferbewegung bezüglich der Manövrierkonsole vollzieht, und einem zweiten Betriebszustand einstellbar ist, in dem der Manövrierhebel um die zweite Schwenkachse gedreht wird, wobei das zweite Lagerelement eine Transferbewegung bezüglich der Manövrierkonsole vollzieht, wobei ein erstes und ein zweites Übertragungsmittel vorgesehen sind, wobei das erste Übertragungsmittel (25/55) zur Übertragung der Betriebsstellungen in dem ersten Betriebszustand und das zweite Übertragungsmittel zur Übertragung der Betriebsstellungen in dem zweiten Betriebszustand vorgesehen sind, wobei das erste Übertragungsmittel (25/55) mit dem Manövrierhebel an einem Befestigungspunkt (26/57) verbunden ist, durch den aktiv die Stellungen während der Drehung um die erste Drehachse (17/53) übertragbar sind, und der während der Drehung um die zweite Drehachse (18/54) inaktiv ist.

2. Manövriervorrichtung nach Anspruch 1, **dadurch gekennzeichnet, daß** die erste Drehachse (17) sich durch ein unteres Ende des Manövrierhebels (1) erstreckt und bezüglich einer Längsachse (20), die sich in der Längsrichtung des Manövrierhebels erstreckt, einen Winkel bildet, und daß der Befestigungspunkt (26) des ersten Übertragungsmittels (25) oberhalb des unteren Endes angeordnet ist.

3. Manövriervorrichtung nach Anspruch 2, **dadurch gekennzeichnet, daß** das erste Drehzapfengelenk (3) an einem unteren Ende des Manövrierhebels (1) angeordnet ist, und daß die erste Drehachse (17), die zweite Drehachse (18) und die Längsachse (20) des Manövrierhebels einander in dem Drehpunkt (19) des ersten Drehzapfengelenks schneiden.

4. Manövriervorrichtung nach Anspruch 1, **dadurch gekennzeichnet, daß** die erste Drehachse (53) in einer Entfernung von dem unteren Ende des Manövrierhebels angeordnet ist, und daß der Befestigungspunkt (57) unterhalb der Drehachse angeordnet ist.

5. Manövriervorrichtung nach Anspruch 4, **dadurch gekennzeichnet, daß** das erste Drehzapfengelenk (3/50) in einer Entfernung von dem Manövrierhebel (1) angeordnet ist.

## Revendications

1. Dispositif d'actionnement comportant un levier d'actionnement (1) et une console d'actionnement (2), et étant muni d'au moins une première liaison formant pivot (3/50) par l'intermédiaire de laquelle le levier est agencé de manière articulée par rapport à la console d'actionnement pour être ajusté entre plusieurs positions d'actionnement, les positions d'actionnement du levier d'actionnement autour de ladite liaison formant pivot étant prévues pour être transformées en conditions de fonctionnement correspondantes d'un dispositif qui doit être actionné, dans lequel ladite liaison formant pivot (3/50) forme un premier élément de support, qui est adapté pour former un premier point de pivotement du levier d'actionnement (1) dans la console d'actionnement, dans lequel la liaison formant pivot est adaptée pour permettre une rotation du levier d'actionnement par rapport à la console d'actionnement autour de plusieurs axes dans l'espace et dans lequel un deuxième élément de support (4/51) du levier d'actionnement par rapport à la console d'actionnement est adapté pour former un deuxième point de pivotement du levier d'actionnement, lequel point de pivotement, associé à la première liaison formant pivot, définit un premier axe de pivotement (17/53) du levier d'actionnement et dans lequel un troisième élément de support (5/52) est adapté pour former un troisième point de pivotement du levier d'actionnement, **caractérisé en ce que** ledit troisième point de pivotement, associé à la première liaison formant pivot, définit un second axe de pivotement (18/54) du levier d'actionnement, **en ce que** le premier et le second axe de pivotement sont agencés angulairement l'un par rapport à l'autre et **en ce que** le deuxième et le troisième élément de support, par l'intermédiaire d'une rotation du levier d'actionnement autour de la première liaison formant pivot, sont adaptés pour être ajustés entre un premier mode d'actionnement, dans lequel le levier d'actionnement est mis en rotation autour du premier axe de pivotement, le troisième élément de support effectuant un mouvement de transfert par rapport à la console d'actionnement, et un second mode d'actionnement, dans lequel le levier d'actionnement est mis en rotation autour du second axe de pivotement, le deuxième élément de support effectuant un mouvement de transfert par rapport à la console d'actionnement, dans lequel un premier et un second agent de transmission sont fournis, ledit premier agent de transmission (25/55) étant adapté pour transmettre lesdites positions d'actionnement dans ledit premier mode d'actionnement et ledit second agent de transmission étant adapté pour transmettre lesdites positions d'actionnement dans ledit second mode d'actionnement, de sorte que ledit premier agent de transmission (25/55) est relié au levier d'actionnement au niveau d'un point de fixation (26/57) qui est adapté pour transmettre de manière active lesdites positions pendant une rotation autour du premier axe de pivotement (17/53) et pour être inactif pendant une rotation autour du second axe de pivotement (18/54).

2. Dispositif d'actionnement selon la revendication 1,
**caractérisé en ce que** ledit premier axe de pivotement (17) s'étend à travers une extrémité inférieure du levier d'actionnement (1) et forme un angle par rapport à un axe longitudinal (20) qui s'étend dans la direction longitudinale du levier d'actionnement et **en ce que** le point de fixation (26) du premier agent de transmission (25) est situé au-dessus de l'extrémité inférieure.

3. Dispositif d'actionnement selon la revendication 2,
**caractérisé en ce que** ladite première liaison formant pivot (3) est agencée à l'extrémité inférieure du levier d'actionnement (1) et **en ce que** le premier axe de pivotement (17), le second axe de pivotement (18) et l'axe longitudinal (20) du levier d'actionnement se recoupent l'un l'autre au point de pivotement (19) de la première liaison formant pivot.

4. Dispositif d'actionnement selon la revendication 1,
**caractérisé en ce que** ledit premier axe de pivotement (53) est situé à distance à partir de l'extrémité inférieure du levier d'actionnement et **en ce que** ledit point de fixation (57) est situé en dessus dudit axe de pivotement.

5. Dispositif d'actionnement selon la revendication 4,
**caractérisé en ce que** la première liaison formant pivot (3/50) est située à distance à partir du levier d'actionnement (1).
